# EUROPEAN PATENT SPECIFICATION

(11) **EP 0 708 125 B1**
(45) Date of publication and mention of the grant of the patent: **30.05.2001**
(21) Application number: 95402341.2
(22) Date of filing: 20.10.1995
(51) Int. Cl.: C08G 18/12, C08G 18/32, C08G 18/28, C08K 5/524, C08G 18/24

(54) **Process for the preparation of viscosity-stable polyurethanic elastomer**
Verfahren zur Herstellung von viskositätsstabilen Polyurethan-Elastomeren
Procédé de préparation d'élastomères de polyuréthane à viscosité stable

(30) Priority: 22.10.1994 KR 9427070
(43) Date of publication of application: 24.04.1996
(73) Proprietor: DSI Inc., Kyungsan-City, Kyungsangbuk-Do (KR)
(72) Inventor: Ihm, Dae Woo, Songpa-ku, Seoul (KR); Lee, Jae Chul, Suwon-City, Kyunggi-Do (KR); Lee, Heung Woo, Suwon-City, Kyunggi-Do (KR); Kee, Young Cherl, Seongnam-City, Kyunggi-Do (KR)
(74) Representative: Le Roux, Martine

(56) References cited:
- EP-A- 0 421 215
- EP-A- 0 604 890
- WO-A-94/23100
- FR-A- 2 183 274
- DATABASE WPI Week 9536 Derwent Publications Ltd., London, GB; AN 273273 XP002006003 "ELASTIC FIBRE PRODUCE" & JP-A-07 173 721 (DAIICHI GOSEN) , 11 July 1995
- CHEMICAL ABSTRACTS, vol. 84, no. 6, 9 February 1976 Columbus, Ohio, US; abstract no. 31959h, ONO ET AL: "POLYURETHANE POLYMER SOLUTION" page 35; column 2; XP002006002 & JP-A-49 049 040 (TOYOBO) 25 December 1974
- DATABASE WPI Week 9105 Derwent Publications Ltd., London, GB; AN 32979 XP002006004 "POLYESTER PREPARATION" & JP-A-02 302 432 (TEIJIN) , 14 December 1990

## Description

### BACKGROUND OF THE INVENTION

### Field of the invention

The present invention relates, in general, to a process for the preparation of polyurethanic elastomer and, more particularly, to a process for the preparation of polyurethanic elastomer, capable of providing superior stability for the viscosity of the elastomer without degrading the intrinsic physical properties thereof.

### Description of the Prior Art

Elastic fibers of polyurethane are useful for a plurality of purposes by virtue of their superior elasticity and elastic recovery. For example, they are used in manufacturing flexible textiles, such as stockings and underwear for women. Recently, the use of the elastic fiber of polyurethane has been and continues to be expanded into, for example, swimming suits and so on.

In general, polyurethanic elastomers are produced, along with by-products which are caused by the impurities contained in raw materials or the various faults or mistakes on process steps. Owing to the by-products, the obtained polymeric solutions are instable in viscosity and further become highly viscous with the lapse of time. Such viscosity change with the lapse of time adversely affects the spinning properties of the polymer, so that the final elastic fibers might be inferior in their physical properties.

To solve the above-mentioned problems, many researches have earnestly been conducted. For example, Japanese Patent Publication No. Hei. 5-43644 discloses a process in which glycols are reacted with polyisocyanates in the presence of a compound having one active hydrogen per molecule, to produce polyurethane prepolymers which are then extended by a chain-growing agent. Such process can be preventive of the generation of by-products and the viscosity change with the lapse of time, to some degree. However, the process is proved to yield an insufficient result. For example, not only may various problems be caused upon spinning the prepared polyurethane, but also the resulting elastic fibers do not show suitable physical properties.

The German firm BAYER has also been involved in this technical field. It has disclosed :
- in FR-A-2 183 274, a process for the preparation of light-stable polyurethane-urea solutions from specific prepolymers,
- in EP-A-0 421 215, a process for the production of segmented polyurethane urea elastomers based on relatively high molecular weight dihydroxy compounds, aliphatic and/or cycloaliphatic diisocyanates and diamines and chain terminators and their shaping into threads and films.

### SUMMARY OF THE INVENTION

Therefore, an object of the present invention is to overcome the above problems encountered in prior arts and to provide a process for the preparation of viscosity-stable elastic fiber of polyurethane; capable of remarkably improving thermal resistance and viscous stability without degradation of intrinsic physical properties including elongation, tensile strength and elastic recovery.

Such a process is as claimed in the joined set of claims.

According to the present invention, the above object is accomplished by providing a process for the preparation of polyurethanic elastomer, comprising the steps of:
reacting 1 mole of a diol component consisting of 0.9 to 0.95 mole of a high molecular weight diol compound having a number average molecular weight of 1,000 to 3,000 and 0.05 to 0.1 mole of a low molecular weight diol having a number average molecular weight of 50 to 500 with 1.25 to 2.5 moles an excess of diisocyanate in the presence of a catalyst comprising dibutyltin dilaurate and tin dioctoacte, to give a prepolymer, said catalyst advantageously amounting to 0.001 to 0.01 weight percent based on the total weight of both the diol component and the diisocyanate compound ;
dissolving the prepolymer in a solvent;
extending the chain of the prepolymer with a mixture of linear diamines and cyclic diamines, said mixture amounting to 0.60 to 0.98 mole per each mole of the prepolymer and the ratio of linear amines to cyclic diamines in said mixture being comprised between 2 and 20 ;
blocking the terminal of the polymer with isopropyl amine, to complete the polymerization; said isopropylamine being advantageously in an amount of 1 to 30 mole percent of said diamines compound ;
and adding pentaerythritol phosphite to the polymeric solution, advantageously in an amount of 0.05 to 2.5 weight percent based on the weight of the solid portion of the polymeric solution, to improve the light fastness of elastomer.

These and other objects and advantages of the present invention will be more apparent as following description proceeds.

### DETAILED DESCRIPTION OF THE PRESENT INVENTION

The present invention pertains to an improvement in stability of viscosity of polyurethanic elastomer through the actions of a suitable catalyst and a chain-growing agent when the polyurethanic elastomer is produced.

For the polyurethanic elastomer, a prepolymer which is obtained by reacting a diol component consisting of a low molecular weight diol compound and a high molecular weight diol compound with an excess of diisocyanate compound in the presence of a suitable catalyst of metallic compound is elongated by the action of a chain-growing agent. This elongation of the prepolymer is stopped by adding a chain-growth stopper.

In the diol component, the high molecular weight diol compound amounts to 0.9 to 0.95 mole percent and correspondingly, the low molecular weight diol compound amounts to 0.05 to 0.1 mole percent.

The high molecular weight diol compound which functions as a soft segment in the elastomer has a number average molecular weight of 1,000 to 3,000.

Concrete examples of the high molecular weight diol compound used in the present invention include polyethers, such as polyoxypropylene glycol, polyoxyethylene glycol, polytetramethyleneether glycol, polyoxytetramethylene glycol and polyoxypentamethylene glycol; polyesters, such as polyethylene adipate, polybutylene adipate, polyneopentyl adipate, polyhexamethylene adipate, and polycaprolactone; and polycarbonate compounds, such as polybutylene carbonate and polyhexamethylene carbonate. Of these compounds, polytetramethylene ether glycol is most preferred, in consideration of physical properties of elastomer. In case of employing polytetramethyleneether glycol, it is preferred that the compound has a number average molecular weight of approximately 1,500 to 2,500.

As for the low molecular weight diol compound, it plays an important role in increasing crosslinking density in the polyurethanic elastomer, thereby providing thermal stability. In order to achieve this role, the low molecular weight diol compound has a number average molecular weight of 50 to 500. Exemplary examples of low molecular weight diol compound include ethylene glycol, diethylene glycol, propylene glycol, dipropylene glycol and 1,4-butane diol.

In accordance with the present invention, the diol component consisting of the high molecular weight compound and the low molecular weight compound is reacted with a diisocyanate compound in an amount of 0.4 to 0.8 mole based on unit mole of the diisocyanate compound. For example, if the diol component is used in an amount of below 0.4 mole per mole of the diisocyanate compound, the polymer obtained is improved in strength but deteriorated in intrinsic properties of elastomer, inter alia, elongation and elastic recovery. On the other hand, if over 0.8 mole of the diol compound per mole of the diisocyanate is used, the polymer obtained is improved in elongation and elastic recovery but deteriorated in strength and thus, its use for, especially, elastic fiber is limited.

As expressed previously, the mole ratio of the high molecular weight diol compound to the low molecular weight diol compound is preferably on the order of 9 to 19. For example, if this mole ratio is less than 9, elastic fiber prepared from the polyurethanic elastomer is inferior in intrinsic physical properties of elastomer. On the other hand, if the mole ratio is over 19, there is only slightly improved thermal resistance.

Bonded with a chain-growing agent of diamine compound, the diisocyanate compound plays a role of hard segment in the polyurethanic elastomer. Concrete examples of diisocyanate compound used in the present invention includes p-phenylene diisocyanate, m-phenylene diisocyanate, 2,4-tolylene diisocyanate, 2,6-tolylene diisocyanate, 1-chloro-1, 2-phenylene diisocyanate, 1,5-naphthalene diisocyanate, 1,4-phenylene diisocyanate, chlorophenylene 2,4-diisocyanate, methylene bis 4-phenyldiisocyanate, hexamethylene diisocyanate, poly(methylene)poly(phenyl) diisocyanate, methylcyclohexylene diisocyanate, para-phenyl diisocyanate, para-phenylene diisocyanate, 4,4'-diphenylisopropyl diisocyanate, 3,3'-dimethyl-4,4'-diphenylene diisocyanate, 3,3'-dimethoxy-4,4'-diphenylene diisocyanate, and 4,4'-diphenylmethane diisocyanate. Of these compound, 4,4'-diphenylmethane diisocyanate is most preferred, in consideration of the reactivity with the diol compounds and the physical properties of the elastomer.

The diisocyanate compound is preferably added in an amount of 1.25 to 2.5 mole percent based on unit mole of the diol component. For example, if too little diisocyanate compound is added, the obtained polymer is good in elongation but inferior in strength and elastic recovery. On the other hand, if too much diisocyanate compound is added, the strength and elastic recovery of the elastomer is improved but the intrinsic physical properties required of elastomer are deteriorated.

As previously mentioned, the reaction of the diol compounds with the diisocyanate compound produces by-products due to impurities contained the raw materials in addition to giving desired polymers. The by-products, which generally have bad influence on the polymers, generate a gelation phenomenon, instabilizing the viscosity of the polymer solution.

In order to prevent the production of by-products, the diol compounds are reacted with the diisocyanate compound in the presence of reaction catalysts, in accordance with the present invention. A combination of at least two materials is necessary in that reaction velocity is more raised. The combination must contain both dibutyltin dilaurate and tin dioctoate. Examples of additional reaction catalysts useful in the present invention include diazabicyclooctane, trialkylamine, N-alkylmorpholine, peralkylate aliphaticpolyamine, tetramethylbutane diamine, 1,4-diazo 2,2,2-bicyclooctane, tin dioxide, triethyl aluminum, di-n-butylenemaleic acid ester, di-n-butyltinbisoctyl thioglycolester, barium laurate, barium benzoate, barium phenolate, potassium stearate, tetratitantriethyl aluminum, barium octoate, alkyllithium, n-butyllithium, and the combinations of those materials.

A suitable weight ratio of dibutyltin dilaurate (hereinafter represented as "C") to tin dioctoate (hereinafter represented as "D") is important for appropriate prepolymer.

In accordance with a preferred embodiment of the present invention, the diol component is reacted with the diisocyanate compound in the presence of a combination of dibutyltin dilaurate and tin dioctoate wherein dibutyltin dilaurate amounts to 10 to 100 weight percent of tin octoate. That is, the weight ratio of C/D is preferably 0.1 to 1.0. For example, if the weight ratio of C/D is below 0.1, the reactivity is insufficient. On the other hand, if the weight ratio of C/D is over 1.0, the reaction of diol component with diisocyanate is virtually impossible to control because of too rapid reactivity. The combination is used preferably in an amount of 0.001 to 0.01 % by weight based on the total amount of diol compound and diisocyanate compound. For example, the amount of less than 0.001 % by weight is insufficient to make it function as catalyst, aggravating side-reaction. On the other hand, if too much catalyst is used, it is difficult to control the reaction velocity.

The used catalyst is generally used in such an amount : 0.001 to 0.01 % by weight based on the total amount of diol compound and diisocyanate compound.

Prepolymer resulting from the reaction of the diol component with the diisocyanate compound is elongated by a chain-growing agent until it has a proper molecular weight. As the chain-growing agent, there are used diamine compounds.

In accordance with the present invention, the chain-growing agent preferably consists of two species of linear diamine compounds and two species of cyclic diamine compounds and is added in an amount of 0.60 to 0.98 mole based on unit mole of the prepolymer.

Preferred diamine compounds include linear diamines, such as 1,2-propylene diamine, 2,3-butylene diamine, and methylimino-bis(propylamine), ethylene diamine, ethanol diamine, tetramethylene diamine, pentamethylene diamine, hexamethylene diamine and octamethylene diamine, and cyclic diamines, such as metaxylene diamine, paraxylene diamine, 2,5-dimethyl piperazine, 2-methyl piperazine, 1-methyl-2,4-diaminebenzene, 1,2-cyclohexane diamine, 1,3-cyclohexane diamine, 1,4-cyclohexane diamine and paraphenylene diamine.

Diamine compounds are added in an amount of 5 0.60∼0.98 mole based on the prepolymer.

In order to improve the viscous stability of the obtained polymeric solution and the physical properties of the elastic fiber spun, the linear diamines and the cyclic diamines are required to be present in proper mole ratios. The mole ratio of the linear diamines to the cyclic diamines is on the order of 2 to 20. For example, if the mole ratio is less than 2, low molecular weight polymers, which are poor in mechanical properties including strength, elongation, elastic recovery and etc, are produced since the reactivity thereof becomes inferior. On the other hand, if the mole ratio is larger than 20, the stability and thermal resistance of the polymer are lowered by a large quantity of by-products effected by too fast reaction velocity.

For the linear diamines a combination of ethylene diamine and 1,2-propylene diamine is advantageously employed with the aim of maintaining appropriate reaction velocity in the elongation, allowing viscosity stability in the obtained polymer and enhancing the physical properties of the resultant elastic fiber. It is preferred that the mole ratio of ethylene diamine to 1,2-propylene diamine ranges from 0.1 to 10. For example, if the mole ratio is below 0.1, reactivity in the chain growth of the prepolymer is mean. On the other hand, if the mole ratio is above 10, the chain growth is too insufficient to obtain a suitable molecular weight for good physical properties.

As the cyclic amines, a combination of metaxylene diamine and 1,4-cyclohexane diamine is advantageously used. In this combinaison, metaxylene diamine is present preferably in an amount of 0.1 to 10 moles per mole of 1,4-cyclohexane diamine. For example, if the mole ratio of metaxylene diamine to 1,4-cyclohexane diamine is below 0.1, reactivity in the elongation of the prepolymer is too fast, which leads to mass production of by-products. On the other hand, if the mole ratio is over 10, it is virtually impossible to obtain a polymer with good physical properties due to slowness of the reactivity.

For a proper reaction velocity and the prevention of the degradation of physical properties in the polymer, there is preferably employed a proper combination of ethylene diamine and 1,2-propylene diamine as linear diamines and metaxylene diamine and 1,4-cyclohexane diamine as a cyclic diamine.

As mentioned above, the elongation of the prepolymer is stopped by blocking the terminal group thereof with isopropyl amine. Indeed, isopropyl amine is superior in stopping the terminal blockage and further, preventive of secondary side-reaction. Therefore, it can bestow not only a suitable molecular weight but also stability on the resulting elastomer.

Isopropyl amine as chain-growth stopper is generally added in an amount of 1 to 30 mole percent based on the total moles of the diamines used as a chain-growing agent in the present invention. For example, if too little monoamine is used, there is effected a poor blockage of the terminal groups, resulting in a serious change of viscosity of the polymer with the lapse of time as well as a rapid increase of the viscosity. As a result, it is difficult to spin yarns out of the viscous polymer. On the other hand, too much monoamine impedes the elongation of the prepolymer, resulting in polymers with molecular weights insufficient to spin them and to exhibit good physical properties, such as strength, elongation and elastic recovery.

The diisocyanate terminal of the prepolymer obtained through the reaction of the diol component with an excess of diisocyanate compound is extended in a solvent which is thus an important factor to determine the viscosity of the polymer solution. Therefore, it is important to select a suitable solvent in order to improve the spinning properties of the elastomer obtained. Exemplary examples of the solvent include dimethylacetamide, dimethylformamide, hexamethylphosphoramide, dimethyl nitrosoamine, dimethylpropionamide, methoxydimethylacetamide, N-methyl pyrrolidine, dimethylsulfoxide and tetramethylenesulfone. Preferred is dimethylacetamide or dimethylformamide in consideration of compatibility with the polymer, spinning property and solvent recovery.

Advantageously, controlled amount of solvent is used in such a way to make the polymeric solid portion amount to 15 to 45 % of the polymer solution. Deficient solid portion results in weak strength in the resulting elastic fiber. Meanwhile, surplus solid portion adversely affects the spinning owing to high viscosity.

Fastness to day light and to harmful gas of the air is of great importance in fibers. For improvement in the fastness, pentaerythritol phosphite is used, in consideration of the intrinsic physical properties of the elastic polymer, the spinning property and the fastness to day light and harmful gas in the air. Additional compounds that may be used are phosphorous compounds, such as triphenyl phosphite, diphenylisodecyl phosphite, phenyldiisodecyl phosphite, 4,4'-butylidene-bis(3-methy1-6-t-butylphenylditridecyl)phosphite, cycloneopentanetetrabis(octadecyl) phosphite and tris(nonylphenyl) phosphite, or benzophenone compounds, such as 2-hydroxy-4-methoxybenzophenone, 2-hydroxy-4-octoxybenzophenone and 2,2'-dihydroxy-4-methoxybenzophenone.

Based on the weight of the polymeric solid portion, pentaerythritol phosphite compound is generally added in an amount of 0.05 to 2.5 % by weight. For example, if pentaerythritol phosphite is used too little, improvement in light fastness is insufficiently produced. On the other hand, if pentaerythritol phosphite is excessively added, the intrinsic physical properties of the elastic polymer are deteriorated. Excess amount of pentaerythritol phosphite also adversely affects the spinning property. In addition, since improvement in light fastness is little in relation to the excess amount, it is uneconomical.

The preferred embodiments of the present invention will now be further described in the following examples.

Using a dry spinning process 7.8 tex (70 denier) polyurethane elastic fibers were produced from the polymeric solution prepared. This obtained fibers were subjected to various tests to measure their physical properties.

In the following Examples, tensile strength, elongation and elastic recovery were measured as determined according to KSK 0219, and thermal resistance was evaluated by treating the elastic fiber in hot water of about 130 °C for 40 minutes and thereafter, measuring its strength maintenance and discoloration. Meanwhile, light fastness was tested as determined according to KSK 0700.

The viscosity of the polymer was measured by use of a rotational viscometer such as that sold by Brookfield Co. Ltd., identified as model number DV-III.

### EXAMPLE 1

A mixture of 1,000 g of polytetramethylene etherglycol with a molecular weight of 1,950 and 4 g of ethylene glycol with a molecular weight of 50 to 500 was added with 250 g of 4,4'-diphenylmethane diisocyanate, followed by addition of 0.025 g of dibutyltin dilaurate and 0.075 g of tin dioctoate to the mixture. The reaction system was subjected to polymerization under an ambient of nitrogen at 80 °C for 60 minutes, to give a prepolymer showing a viscosity of 50 Pa.s (500 poise) at 50 °C. This prepolymer was dissolved in 800 g of dimethylacetamide and cooled to 5 °C.

Separately, a chain-growing agent was prepared with mixing a linear diamine component consisting of 11.55 g of ethylene diamine and 9.51 g of 1,2-propylene diamine with a cyclic diamine component consisting of 6.70 of metaxylene diamine and 2.49 g of 1,4-cyclohexane diamine and added along with 4.00 g of isopropyl amine, a chain-growth stopper, into 1,000 g of dimethylacetamide.

Over the prepolymer solution, the chain-growing agent and stopper solution was slowly poured, to give a polymeric solution with a viscosity of 330 Pa.s (3,300 poise). After polymerization, a solution wherein 25 g of pentaerythritol phosphite, a fastness-improving agent to light and harmful gas in the air, was dissolved in 650 g of dimethyl acetamide was slowly added in the polymeric solution, such that the resulting polymeric solution had a viscosity of 300 Pa.s (3,000 poise) and a solid portion of 35 %.

Using a dry spinning process, a 7.8 tex (70 denier) polyurethane elastic fiber was produced, and the physical properties thereof were measured.

The results of the measurement are given as shown in the following Table 1.

### COMPARATIVE EXAMPLE 1

Example 1 was repeated without using dibutyltin dilaurate and tin dioctoate. The same tests as in Example 1 were conducted, to measure the physical properties of the resulting elastic fiber.

Results of the individual test are given as shown in the following Table 1.

### COMPARATIVE EXAMPLE 2

A 7.8 tex (70 denier) polyurethane elastic fiber was produced in the same manner as in Example 1, except that 0.00025 g of dibutyltin dilaurate was used. The same tests as in Example 1 were conducted, to measure the physical properties of the resulting elastic fiber.

Results of the individual test are given as shown in the following Table 1.

### COMPARATIVE EXAMPLE 3

Example 1 was repeated using 0.125 g of dibutyltin dilaurate. The same tests as in Example 1 were conducted, to measure the physical properties of the resulting elastic fiber.

Results of the individual test are given as shown in the following Table 1.

### COMPARATIVE EXAMPLE 4

Example 1 was repeated taking the mole ratio of the linear diamine component to the cyclic diamine component into 50. The same tests as in Example 1 were conducted, to measure the physical properties of the resulting elastic fiber.

Results of the individual test are given as shown in the following Table 1.

**Table 1**

| | Example Nos. | | | | |
|---|---|---|---|---|---|
| Properties | 1 | C1 | C2 | C3 | C4 |
| Tensile Strength (g/d) | 1.35 | 1.25 | 1.27 | 1.10 | 1.15 |
| Elongation ratio (%) | 700 | 650 | 660 | 670 | 600 |
| Elastic Recovery (%) | 94 | 90 | 89 | 91 | 88 |
| Viscosity (poise) | | | | | |
| Prepolymer | | | | | |
| Initial | 500 | 600 | 550 | 800 | 510 |
| After 7 days | 710 | 900 | 800 | 1200 | 520 |
| Polymer | | | | | |
| Initial | 3000 | 3500 | 3400 | 3900 | 3400 |
| After 7 days | 3200 | 4500 | 4000 | 4800 | 4100 |
| Thermal Resistance | | | | | |
| Strength Maintenance (%) | 93 | 89 | 85 | 84 | 78 |
| Elastic Recovery | | | | | |
| Maintenance (%) | 91 | 86 | 85 | 79 | 78 |

From the examples and table, it is apparent that the method according to the present invention can prepare an elastic polyurethane fiber superior in thermal resistance and viscosity stability without degradation of its intrinsic physical properties including elongation, tensile strength and elastic recovery.

Other features, advantages and embodiments of the invention disclosed herein will be readily apparent to those exercising ordinary skill after reading the foregoing disclosures.

## Claims

1. A process for the preparation of polyurethanic elastomer comprising the steps of :
- reacting 1 mole of a diol component consisting of 0.9 to 0.95 mole of a high molecular weight diol having a number average molecular weight of 1,000 to 3,000 and 0.05 to 0.1 mole of a low molecular weight diol having a number average molecular weight of 50 to 500 with 1.25 to 2.5 moles of an excess of diisocyanate in the presence of a catalyst comprising dibutyltin dilaurate and tin dioctoate to give a prepolymer ;
- dissolving the prepolymer in a solvent;
- extending the chain of the prepolymer with a mixture of linear diamines and cyclic diamines, the ratio of linear diamines to cyclic diamines being comprised between 2 and 20 and said mixture amounting to 0.60 to 0.98 mole per each mole of the prepolymer ;
- blocking the terminal of the polymer with isopropyl amine, to complete the polymerization ;
- adding pentaerythritol phosphite to the polymeric solution to improve the light fastness of elastomer.

2. The process according to claim 1, wherein the mole ratio of dibutyltin dilaurate to tin dioctoate is comprised between 0.1 and 1.0.

3. The process according to claim 1 or 2, wherein said catalyst is used in an amount of 0.001 to 0.01 weight percent based on the total weight of both said diol component and said diisocyanate compound.

4. The process according to anyone of claims 1 to 3, wherein the linear diamines consist essentially of ethylene diamine and 1,2-propylene diamine and the mole ratio of ethylene diamine to 1,2-propylene diamine is 0.1 to 10.

5. The process according to anyone of claims 1 to 4, wherein the cyclic diamines consist essentially of metaxylene diamine and 1,4-cyclohexane diamine and the mole ratio of metaxylene diamine to 1,4-cyclohexane diamine is 0.1 to 10.

6. The process according to anyone of claims 1 to 5, wherein the isopropyl amine is used in an amount of 1 to 30 mole percent of said diamine compounds.

7. The process according to anyone of claims 1 to 6, wherein the pentaerythritol phosphite is used in an amount of 0.05 to 2.5 weight percent based on the weight of the solid portion of the polymeric solution.

## Patentansprüche

1. Verfahren zur Herstellung eines Polyurethanelastomers, das die folgenden Stufen umfasst:
- Umsetzen 1 Mols einer Diolkomponente, die aus 0,9 bis 0,95 Mol eines ein hohes Molekulargewicht aufweisenden Diols mit einem anzahlgemittelten Molekulargewicht von 1000 bis 3000 und 0,05 bis 0,1 Mol eines ein niedriges Molekulargewicht aufweisenden Diols mit einem anzahlgemittelten Molekulargewicht von 50 bis 500 besteht, mit 1,25 bis 2,5 Mol eines Überschusses Diisocyanat in Gegenwart eines Katalysators, der Dibutylzinndilaurat und Zinndioctoat umfasst, zur Bildung eines Präpolymers;
- Auflösen des Präpolymers in einem Lösungsmittel;
- Verlängern der Kette des Präpolymers mit einem Gemisch aus linearen Diaminen und cyclischen Diaminen, wobei das Verhältnis der linearen Diamine zu den cyclischen Diaminen zwischen 2 und 20 liegt und das Gemisch 0,60 bis 0,98 Mol pro Mol Präpolymer ausmacht;
- Blockieren des Endes des Polymers mit Isopropylamin, um die Polymerisation zu beenden;
- Zugeben von Pentaerythritphosphit zu der Polymerlösung, um die Lichtechtheit des Elastomers zu verbessern.

2. Verfahren nach Anspruch 1, wobei das Molverhältnis von Dibutylzinndilaurat zu Zinndioctoat zwischen 0,1 und 1,0 liegt.

3. Verfahren anch Anspruch 1 oder 2, wobei der Katalysator in einer Menge von 0,001 bis 0,01 Gew.-%, bezogen auf das Gesamtgewicht sowohl der Diolkomponente als auch der Diisocyanatkomponente, verwendet wird.

4. Verfahren nach einem der Ansprüche 1 bis 3, wobei die linearen Diamine im wesentlichen aus Ethylendiamin und 1,2-Propylendiamin bestehen und das Molverhältnis von Ethylendiamin zu 1,2-Propylendiamin 0,1 bis 10 beträgt.

5. Verfahren nach einem der Ansprüche 1 bis 4, wobei die cyclischen Diamine im wesentlichen aus Metaxylendiamin und 1,4-Cyclohexandiamin bestehen und das Molverhältnis von Metaxylendiamin zu 1,4-Cyclohexandiamin 0,1 bis 10 beträgt.

6. Verfahren nach einem der Ansprüche 1 bis 5, wobei das Isopropylamin in einer Menge von 1 bis 30 Mol-% der Diaminverbindungen verwendet wird.

7. Verfahren nach einem der Ansprüche 1 bis 6, wobei das Pentaerythritphosphit in einer Menge von 0,05 bis 2,5 Gew.-%, bezogen auf das Gewicht des festen Anteils der Polymerlösung, verwendet wird.

## Revendications

1. Procédé de préparation d'un élastomère de polyuréthane comprenant les étapes de :
- réaction d'une mole d'un composant diol consistant en 0,9 à 0,95 mol d'un diol de haute masse moléculaire ayant une masse moléculaire moyenne en nombre de 1 000 à 3 000 et en 0,05 à 0,1 mol d'un diol de faible masse moléculaire ayant une masse moléculaire moyenne en nombre de 50 à 500 avec 1,25 à 2,5 mol d'un excès de diisocyanate en présence d'un catalyseur comprenant du dilaurate de dibutylétain et du dioctoate d'étain pour produire un prépolymère ;
- dissolution du prépolymère dans un solvant ;
- extension de la chaîne du prépolymère avec un mélange de diamines linéaires et de diamines cycliques, le rapport des diamines linéaires aux diamines cycliques étant compris entre 2 et 20 et ledit mélange représentant 0,60 à 0,98 mol par mole de prépolymère ;
- blocage de l'extrémité du polymère avec l'isopropylamine pour achever la polymérisation ;
- addition de phosphite de pentaérythritol à la solution polymère pour améliorer la solidité à la lumière de l'élastomère.

2. Procédé selon la revendication 1, où le rapport molaire du dilaurate de dibutylétain au dioctoate d'étain est compris entre 0,1 et 1,0.

3. Procédé selon la revendication 1 ou 2, où ledit catalyseur est utilisé en une quantité de 0,001 à 0,01 % en masse par rapport à la masse totale dudit composant diol et dudit composé diisocyanate.

4. Procédé selon l'une quelconque des revendications 1 à 3, où les diamines linéaires consistent essentiellement en éthylènediamine et en 1,2-propylènediamine et le rapport molaire de l'éthylènediamine à la 1,2-propylènediamine est 0,1 à 10.

5. Procédé selon l'une quelconque des revendications 1 à 4, où les diamines cycliques consistent essentiellement en métaxylènediamine et 1,4-cyclohexanediamine et le rapport molaire de la métaxylènediamine à la 1,4-cyclohexanediamine est 0,1 à 10.

6. Procédé selon l'une quelconque des revendications 1 à 5, où l'isopropylamine est utilisée en une quantité de 1 à 30 mol % par rapport auxdits composés diamines.

7. Procédé selon l'une quelconque des revendications 1 à 6, où le phosphite de pentaérythritol est utilisé en une quantité de 0,05 à 2,5 % en masse par rapport à la masse de la partie solide de la solution polymère.
